(19) Europäisches Patentamt
European Patent Office
Office européen des brevets

(11) **EP 3 567 590 A1**

(12) **EUROPÄISCHE PATENTANMELDUNG**

(43) Veröffentlichungstag:
**13.11.2019   Patentblatt 2019/46**

(51) Int Cl.:
***G10L 25/78*** (2013.01)

(21) Anmeldenummer: **18171069.0**

(22) Anmeldetag: **07.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Joanneum Research Forschungsgesellschaft mbH 8010 Graz (AT)**

(72) Erfinder:
• **Graf, Franz Dr.**
  **8010 Graz (AT)**
• **Rettenbacher, Bernhard**
  **8051 Graz (AT)**
• **Leitner, Christina Dr.**
  **8020 Graz (AT)**

(74) Vertreter: **Rummler, Felix Maucher Jenkins Liebigstrasse 39 80538 München (DE)**

(54) **VERFAHREN UND VORRICHTUNG ZUR AUTOMATISCHEN ÜBERWACHUNG EINES VERKEHRSWEGES**

(57)    Erfindungsgemäß ist ein Verfahren geschaffen zur automatischen Überwachung eines Verkehrsweges, insbesondere in einem Tunnel, wobei ein akustisches Signal durch zumindest einen, entlang des zu uberwachenden Verkehrsweges angeordneten Schallsensor detektiert wird und wobei eine Analysevorrichtung aus dem akustischen Signal eine Anzahl Merkmale extrahiert, wobei aus der Anzahl Merkmale bestimmt wird, ob das akustische Signal zumindest eine Stimme umfasst.

700

710
Detektieren eines akustischen Signals durch einen Schallsensor

720
Extrahieren von Merkmalen aus dem detektierten Signal

730
Bestimmen anhand der extrahierten Merkmale, ob das akustische Signal eine Stimme umfasst.

740
Bestimmen anhand der extrahierten Merkmale, ob das akustische Signal mehrere Stimmen umfasst.

750
Bestimmen der Anzahl der Stimmen, die das akustische Signal umfasst.

Fig. 7

EP 3 567 590 A1

**Beschreibung**

Gebiet der Erfindung

Die Erfindung betrifft ein Verfahren und eine Vorrichtung zur automatischen Überwachung eines Verkehrsweges, insbesondere in einem Tunnel.

Hintergrund

Die Gewährleistung der Sicherheit auf Verkehrswegen gewinnt durch immer weiter steigendes Verkehrsaufkommen stark an Bedeutung. Beispielhaft seien Straßen- und Schienenverkehrswege genannt, die durch die wachsende Anzahl an privaten und gewerblichen Verkehrsteilnehmern einer hohen Beanspruchung ausgesetzt sind. Mit der steigenden Anzahl an Verkehrsteilnehmern steigt das Risiko durch auftretende Verkehrsstörungen. Gleichzeitig ist die schnelle und zuverlässige Erkennung von Verkehrsstörungen besonders wichtig. Verkehrsstörungen können beispielsweise Unfälle mit einem oder mehreren involvierten Verkehrsteilnehmern sein. Derartige Verkehrsstörungen zeichnen sich durch Anomalien, wie beispielsweise Aufprallgeräusche, Reifenquietschen oder dergleichen, im Verkehrsgeräusch aus.

Aus AT 500 235 B1 ist ein System zur Überwachung eines Verkehrsweges bekannt, das über eine Vielzahl entlang des Verkehrsweges angeordneten Schallsensoren Anomalien im Verkehrsgeräusch erkennt.

Durch das in AT 500 235 B1 beschriebene Überwachsungssystem werden demnach Verkehrsstörungen erkannt, die mit signifikanten, in der Regel kurzen Unfallgeräuschen, wie Aufprall- oder Quietschgeräuschen, in Verbindung stehen.

Allerdings können die im Stand der Technik beschriebenen Geräuschanomalien häufig vorliegen, ohne dass eine Verkehrsstörung vorliegt. Umgekehrt können Verkehrsstörungen auch ohne die beschriebenen Geräuschanomalien auftreten. Hierzu zählen beispielsweise unbewegte Verkehrsteilnehmer. Eine solche Verkehrsstörung kann eine weitere, möglicherweise folgenschwerere Verkehrsstörung verursachen. So kann beispielsweise ein weiterer Verkehrsteilnehmer mit dem unbewegten Verkehrsteilnehmer zusammenstoßen. Eine solche Situation liegt beispielsweise durch ein anhaltendes Auto im Straßenverkehrsweg oder durch einen auf einem Schienenverkehrsweg stehenden Wagon oder durch ein sich auf einem Schienenverkehrsweg befindendes Kraftfahrzeug vor.

In Tunneln besteht ein weiteres Problem darin, dass es bei Verkehrsstörungen zu Rauchentwicklung kommen kann, wodurch eine visuelle Überwachung des Verkehrsweges erschwert oder unmöglich wird. Darüber hinaus stellt die Evakuierung von Personen im Tunnel durch den erschwerten Zugang des Verkehrsweges eine besondere Herausforderung dar, die umso größer ist, wenn die Anzahl und der Aufenthaltsort von Personen auf dem Verkehrsweg unbekannt sind.

Verkehrsstörungen, die sich nicht durch Geräuschanomalien, wie beispielsweise Aufprall- oder Quietschgeräusche, auszeichnen, werden durch die aus dem Stand der Technik bekannten Überwachungssysteme nicht erkannt. Die Nichterkennung dieser Verkehrsstörungen schränkt die Sicherheit auf Verkehrswegen jedoch stark ein.

Die vorliegende Erfindung hat zur Aufgabe die Überwachung eines Verkehrsweges weiter zu verbessern und insbesondere auch Situationen erkennbar zu machen, die eine potentielle Gefahr für Verkehrsteilnehmer darstellen können.

Kurzbeschreibung der Erfindung

Diese Aufgabe wird durch die in den unabhängigen Ansprüchen angegebene Erfindung gelöst. Vorteilhafte Ausgestaltungen sind den Unteransprüchen zu entnehmen.

Erfindungsgemäß ist ein Verfahren geschaffen zur automatischen Überwachung eines Verkehrsweges, insbesondere in einem Tunnel, wobei ein akustisches Signal durch zumindest einen, entlang des zu überwachenden Verkehrsweges angeordneten Schallsensor detektiert wird und wobei eine Analysevorrichtung aus dem akustischen Signal eine Anzahl Merkmale extrahiert, wobei aus der Anzahl Merkmale bestimmt wird, ob das akustische Signal zumindest eine Stimme umfasst.

Die vorliegende Erfindung beruht auf der Erkenntnis, dass eine potentiell gefährliche Verkehrsstörung insbesondere dann vorliegt, wenn sich Personen auf dem Verkehrsweg befinden. So sind Personen beispielsweise im Straßen- oder Schienenverkehr durch die Anwesenheit weiterer Verkehrsteilnehmer einem besonders großen Risiko ausgesetzt.

Personen können freiwillig oder unfreiwillig, wie beispielsweise durch eine Panne des genutzten Fahrzeugs, auf den Verkehrsweg gelangen. Gerade auf unübersichtlichen Verkehrswegen, wie beispielsweise in Kurven, oder schwierig zugänglichen Verkehrswegen, wie beispielsweise in Tunneln, ist das Risiko für Personen besonders hoch. Hier sind eine schnelle Erkennung der Verkehrsstörung und ihre schnelle Beseitigung von besonderer Bedeutung.

Mit Hilfe der vorliegenden Erfindung kann erkannt werden, ob eine Verkehrsstörung mit Personen vorliegt, die sich möglicherweise in Gefahr befinden. Dies wird anhand der Erkennung von Stimmen ermöglicht, die in der überwachten Verkehrssituation, beispielsweise in einem Tunnel, unter normalen Umständen nicht zu erwarten sind. Stimmen können beispielsweise durch mit normaler oder erhöhter Emotion gesprochene Sprache, Schreie oder Ähnliches sein.

Durch die Unterscheidung von Verkehrsgeräuschen einerseits und Stimmen andererseits kann erreicht werden, dass auf dem Verkehrsweg befindliche Personen erkannt werden. Durch das Erkennen von Personen kann eine Verkehrsstörung u.U. bereits behoben werden, bevor sie zu einer Gefährdung weiterer Verkehrsteilnehmer führt.

Ferner kann ein eine Stimme enthaltendes akustisches Signal einem oder mehreren Schallsensoren zugeordnet werden. Dadurch kann der Aufenthaltsort der sich auf dem Verkehrsweg befindlichen Personen bestimmt werden.

In einer Ausgestaltung des erfindungsgemäßen Verfahrens wird aus der Anzahl Merkmale bestimmt, ob das akustische Signal mehrere Stimmen umfasst. Diese Ausgestaltung beruht auf der Erkenntnis, dass gefährliche Verkehrssituationen oft mit der Anwesenheit mehrerer Personen einhergehen. Beispielsweise kann es bei einem Unfall mit zwei oder mehr Fahrzeugen dazu kommen, dass die Fahrer und Mitfahrer der beteiligten Fahrzeuge ihre Fahrzeuge verlassen und miteinander sprechen.

In einer weiteren Ausgestaltung wird aus der Anzahl Merkmale eine Anzahl von Stimmen bestimmt. Eine Anzahl, insbesondere mehrere unterschiedliche Stimmen können dabei einer Anzahl Personen, insbesondere mehreren Personen zuordenbar sein. Aus der Anzahl der Stimmen lassen sich weitere Rückschlüsse auf die Verkehrssituation schließen. Gerade bei einer notwendigen Bergung der Personen ist das Wissen über die Anzahl der Personen und deren Positionen essentiell.

In einer Ausgestaltung wird aus der Anzahl Merkmale eine erste Wahrscheinlichkeit bestimmt, mit der das akustische Signal zumindest eine Stimme umfasst und/oder mehreren Stimmen umfasst und/oder eine bestimmte Anzahl von Stimmen umfasst. Zusätzlich kann aus der Anzahl Merkmale eine zweite Wahrscheinlichkeit bestimmt werden, mit der das akustische Signal keine Stimme umfasst und/oder nicht mehrere Stimmen umfasst und/oder nicht die bestimmte Anzahl Stimmen umfasst, wobei die erste und die zweite Wahrscheinlichkeit kombiniert, insbesondere addiert, und/oder mit zumindest einem Vergleichswert verglichen werden können. Auf diese Weise lassen sich unterschiedliche Verkehrssituationen, insbesondere Verkehrssituationen mit unterschiedlicher potentieller Gefährdung genauer voneinander unterscheiden. Je nach Verkehrssituation können unterschiedliche passende Maßnahmen eingeleitet werden, z.B. die Aktivierung einer Anzeige in einer Leitzentrale, die Sperrung eines Tunnels, etc.

Die folgenden Ausgestaltungen und Maßnahmen ermöglichen eine noch zuverlässigere Einschätzung oder Erkennung von bestimmten gefährdenden Verkehrssituationen:

- Es wird das akustische Signal in eine Anzahl Signalblöcke segmentiert und/oder die Anzahl Merkmale zumindest teilweise aus verschiedenen Signalblöcken extrahiert und/oder es wird zumindest ein Teil der Anzahl Merkmale, insbesondere gleiche Merkmale, über zumindest einen Teil der Signalblöcke, insbesondere zeitlich aufeinanderfolgende Signalblöcke, gemittelt.

- Es werden die erste und/oder zweite Wahrscheinlichkeit jeweils für zumindest einen Teil der Anzahl Signalblöcke bestimmt und/oder jeweils kombiniert, insbesondere addiert, und/oder jeweils mit zumindest einem Vergleichswert verglichen und/oder das Ergebnis des Vergleichs wird über mehrere der Anzahl Signalblöcke gemittelt.

- Die Anzahl Merkmale des akustischen Signals umfassen das Spektrum und/oder aus dem Spektrum abgeleitete Merkmale und/oder das Zeitsignal und/oder aus dem Zeitsignal abgeleitete Merkmale.

- Die aus dem Spektrum und/oder aus dem Zeitsignal abgeleiteten Merkmale umfassen das Cepstrum und/oder aus dem Cepstrum abgeleitete Merkmale und/oder die Flatness des Spektrums und/oder Mel-Frequenz-Cepstrum-Koeffizienten und/oder die Peak-Valley-Differenz und/oder aus der Peak-Valley-Differenz abgeleitete Merkmale und/oder die Kurzzeitenergie und/oder das Amplitudenmodulationsspektrum und/oder den Cepstral-Peak und/oder das Cepstral-Peak-Verhältnis und/oder das Cepstral-Peak-Summenverhältnis und/oder die Cepstral-Peak-Position.

Erfindungsgemäß ist weiterhin ein System geschaffen zur automatischen Überwachung eines Verkehrsweges, insbesondere in einem Tunnel, das zumindest einen, entlang des zu überwachenden Verkehrsweges angeordneten Schallsensor zur Aufnahme von akustischen Signalen und eine Analysevorrichtung umfasst, wobei die Analysevorrichtung dazu ausgebildet ist, eine Anzahl Merkmale der akustischen Signale zu extrahieren, wobei das System eine Spracherkennungsvorrichtung umfasst, die dazu ausgebildet ist, aus der Anzahl Merkmale zu bestimmen, ob das akustische Signal zumindest eine Stimme umfasst.

In einer Ausgestaltung ist Spracherkennungsvorrichtung dazu ausgebildet, aus der Anzahl Merkmale zu bestimmen, ob das akustische Signal mehrere Stimmen umfasst, und/oder aus der Anzahl Merkmale eine Anzahl Stimmen zu bestimmen.

In einer Ausgestaltung ist die Analysevorrichtung dazu ausgebildet, aus der Anzahl Merkmale eine erste Wahrscheinlichkeit zu bestimmen, mit der das akustische Signal zumindest eine Stimme umfasst und/oder mehreren Stimmen umfasst und/oder eine bestimmte Anzahl Stimmen umfasst.

In einer Ausgestaltung ist die Analysevorrichtung dazu ausgebildet, aus der Anzahl Merkmale eine zweite Wahrscheinlichkeit zu bestimmen, mit der das akustische Signal keine Stimme umfasst und/oder nicht mehrere Stimmen umfasst und/oder nicht die bestimmte Anzahl Stimmen umfasst, wobei die Analysevorrichtung dazu ausgebildet ist, die erste Wahrscheinlichkeit und die zweite Wahrscheinlichkeit zu kombinieren, insbesondere zu addieren, und/oder mit zumindest einem Vergleichswert zu vergleichen.

In einer Ausgestaltung umfasst die Analyseeinheit eine Segmentierungsvorrichtung, die dazu ausgebildet ist das akustische Signal in eine Anzahl Signalblöcke zu segmentieren und/oder wobei die Analyseeinheit dazu ausgebildet ist, zumindest einen Teil der Anzahl Merkmale, insbesondere gleiche Merkmale, über zumindest einen Teil der Anzahl Signalblöcke, insbesondere zeitlich aufeinanderfolgende Signalblöcke, zu mitteln.

In einer Ausgestaltung ist die Analysevorrichtung dazu ausgebildet, die erste Wahrscheinlichkeit und die zweite Wahrscheinlichkeit jeweils für zumindest einen Teil der Anzahl Signalblöcke zu bestimmen und/oder jeweils zu kombinieren, insbesondere zu addieren, und/oder jeweils mit zumindest einem Vergleichswert zu vergleichen und/oder das Ergebnis des Vergleichs über mehrere der Anzahl Signalblöcke zu mitteln.

Kurzbeschreibung der Figuren

Nachfolgend sind anhand der beigefügten Figuren beispielhafte Ausführungsformen der Erfindung näher beschrieben. Es zeigen:

Die Figur 1 ein Flussdiagramm eines Prozesses, in dem ein erster Basismerkmalvektor, bestehend aus Merkmalen eines akustischen Signals, bestimmt wird;

die Figur 2 ein Flussdiagramm eines Prozesses, in dem ein zweiter Basismerkmalvektor, bestehend aus weiteren Merkmalen eines akustischen Signals, bestimmt wird;

die Figur 3 ein Flussdiagramm eines Prozesses, in dem ein dritter Basismerkmalvektor, bestehend aus weiteren Merkmalen eines akustischen Signals, bestimmt wird;

die Figur 4 ein Flussdiagramm eines Prozesses, in dem ein Merkmalsvektor auf Basis der Basismerkmalvektoren bestimmt wird;

die Figur 5 ein Flussdiagramm eines Prozesses, in dem ein akustisches Signal anhand des Merkmalvektors klassifiziert wird;

die Figur 6 ein Flussdiagramm eines Verfahrens zur Unterscheidung verschiedener Stimmen;

die Figur 7 ein Flussdiagramm eines Verfahrens zur automatischen Überwachung eines Verkehrsweges.

Figurenbeschreibung

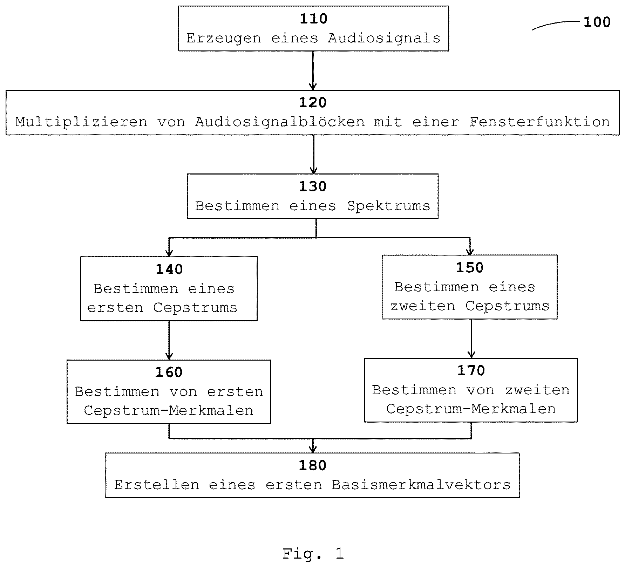

In Figur 1 ist ein Prozess 100 gezeigt, in dem ein erster Basismerkmalvektor bestimmt wird. In Prozessschritt 110 wird ein digitales akustisches Signal erzeugt. Das digitale akustische Signal kann dabei typischerweise eine Abtastrate von 4 kHz bis 48 kHz haben, wobei sich 16 kHz für Signale, die Sprache enthalten, besonders gut eignen.

Das digitale akustische Signal wird in Prozessschritt 120 in zeitliche Signalblöcke einer Signalblocklänge segmentiert und jeder Signalblock wird mit einer Fensterfunktion multipliziert. Werte für die Signalblocklängen liegen beispielsweise zwischen 4 ms und 1000 ms. Dabei können sich die Signalblöcke überlappen. Zum Beispiel können sich die Signalblöcke um 25 % oder um 75 % oder um einen Wert zwischen 25 % und 75 % überlappen. Als Fensterfunktion können beispielsweise Hamming-, Hann, Blackman-, Kaiser-, Dreiecks-, Rechtecks- oder Trapezfensterfunktionen eingesetzt werden.

Ausgehend von den mit einer Fensterfunktion multiplizierten Signalblöcken können einzelne Merkmale des digitalen akustischen Signals bestimmt werden.

In dem Prozessschritt 130 wird von jedem Signalblock ($x[n]$) durch Anwendung der diskreten Fourier-Transformation (DFT) ein Spektrum ($X[k]$) bestimmt. Hierzu kann die mathematische Beschreibung

$$X[k] = \sum_{n=0}^{N-1} x[n] e^{-j\left(\frac{2\pi}{N}\right)kn}, \ k = 0,1,\dots,N-1 \quad \text{(Formel 1)}$$

verwendet werden.

Von dem in Prozessschritt 130 bestimmten Spektrum können einzelne Punkte direkt als Merkmal in Prozessschritt 190 in den ersten Basismerkmalsvektor aufgenommen werden. Des Weiteren können weitere Merkmale anhand des Spektrums bestimmt und in den ersten Basismerkmalvektor aufgenommen werden. Ein solches Merkmal ist beispielsweise die Flatness des Spektrums, die im Allgemeinen angibt, wie spitz die spektrale Verteilung ist. Die spektrale Flatness (SF[X]) kann aus dem Verhältnis des geometrischen zum arithmetischen Mittelwert des Spektrums bestimmt werden. Hierzu kann der mathematische Zusammenhang

$$SF[X] = \frac{\sqrt[N]{\prod_{k=0}^{N-1} X[k]}}{\left(\frac{\sum_{k=0}^{N-1} X[k]}{N}\right)} \quad \text{(Formel 2)}$$

verwendet werden.

Aus dem in Prozessschritt 130 bestimmten Spektrum wird in Prozessschritt 140 ein erstes Cepstrum (c[t]) bestimmt. Dazu kann das Spektrum logarithmiert und auf das Ergebnis wiederum eine DFT angewandt werden. Hierfür kann der mathematische Zusammenhang

$$c[t] = \text{DFT}\{\log|X[k]|\} \quad \text{(Formel 3)}$$

verwendet werden.

Anschließend können alle Werte verworfen werden, die nicht in einem vorgegebenen Wertebereich liegen. Der vorgegebene Wertebereich wird beispielsweise durch die Werte 1 ms und 50 ms begrenzt.

Zur Bestimmung eines zweiten Cepstrum in Prozessschritt 150 wird ein Wertebereich verwendet, der von dem in Prozessschritt 140 verwendeten Wertebereich abweicht.

Aus dem in dem Prozessschritt 140 bestimmten Cepstrum werden in Prozessschritt 160 Cepstrum-Merkmale bestimmt. Zu den bestimmten Merkmalen gehören

- der Cepstral-Peak, also der Wert des Maximums im Cepstrum;
- das Cepstral-Peak-Verhältnis, also das Verhältnis des Wertes des Maximums des Cepstrums zu allen anderen Werten des Cepstrums bestimmt;
- das Cepstral-Peak-Summenverhältnis, also das Verhältnis der Summe der Werte aller Maxima des Cepstrums zur Summe aller anderen Werte des Cepstrums;
- die Cepstral-Peak-Position, also die Position des Maximums im Cepstrum.

In Prozessschritt 170 werden analog zum Prozessschritt 160 Cepstrum-Merkmale für das in Prozessschritt 150 berechnete Cepstrum bestimmt.

Die einzelnen, in den Prozessschritten 130, 140, 150, 160 und 170 bestimmten Merkmale des digitalen akustischen Signals werden in Prozessschritt 180 in einen ersten BasismerkmalVektor zusammengeführt.

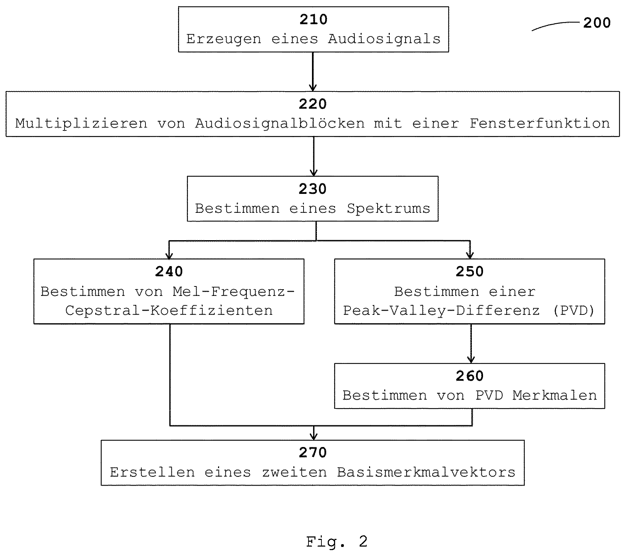

In Figur 2 ist ein Prozess 200 gezeigt, in dem ein zweiter Basismerkmalvektor bestimmt wird. Im Prozess 200 entsprechen die Prozessschritte 210, 220 und 230 den in Figur 1 beschriebenen Prozessschritten 110, 120 und 130.

Im Prozessschritt 240werden Mel-Frequenz-Cepstral-Koeffizienten bestimmt. Dazu werden die Punkte des in Prozessschritt 230 bestimmten Spektrums in einer Filterbank, beispielsweise in einer Dreiecks-Filterbank, zusammengefasst. Die Filterbank kann sich dadurch auszeichnen, dass die Frequenzbänder gemäß der Mel-Skala unterteilt sind.

Das Ergebnis wird logarithmiert Und danach die diskrete Kosinus-Transformation darauf angewandt. Aus der Kosinus-Transformation ergeben sich die Mel-Frequenz-Cepstral-Koeffizienten.

In Prozessschritt 250 werden mehrere Werte für eine Peak-Valley-Differenz (PVD) bestimmt. Die Bestimmung der PVD kann mittels eines Peak-Signatur-Vektors (S[k]) erfolgen, der eine Peak-Signatur enthält. Der Peak-Signatur-Vektor kann ein binärer Vektor sein, also die Werte 0 und 1 enthalten. Dabei kann der Wert eins die Position eines Peaks im Spektrum kennzeichnen. Der Peak-Signatur-Vektor kann aus Spektren von akustischen Signalen bestimmt werden. Die Bestimmung des Peak-Signatur-Vektors kann mit Trainingsdaten erfolgen. Zur Bestimmung der PVD kann die mathematische Beschreibung

$$PVD(S,X) = \frac{\sum_{k=0}^{N-1}(X[k]\cdot S[k])}{\sum_{k=0}^{N-1} S[k]} - \frac{\sum_{k=0}^{N-1}(X[k]\cdot(1-S[k]))}{\sum_{k=0}^{N-1}(1-S[k])} \qquad \text{(Formel 4)}$$

verwendet werden.

Für ein in Prozessschritt 230 bestimmtes Spektrum (X[k]) werden in Prozessschritt 250 aus Formel 4 mit verschiedenen Peak-Signatur-Vektoren verschiedene Werte für die PVD bestimmt.

In Prozessschritt 260 werden aus den mehreren Werten für die PVD PDV-Merkmale bestimmt. Zur Bestimmung der PVD-Merkmale wird

- das Maximum der mehreren Werte für die PVD bestimmt;
- der Mittelwert der mehreren Werte für die PVD bestimmt;
- die Standardabweichung der mehreren Werte für die PVD bestimmt;
- der Mittelwert der fünf größten Werte für die PVD bestimmt; und
- die Standardabweichung für die fünf größten Werte für die PVD bestimmt.

In Prozessschritt 270 werden die in den Prozessschritten 240 und 260 bestimmten Merkmale des akustischen Signals in einem zweiten Basismerkmalsvektor zusammengeführt.

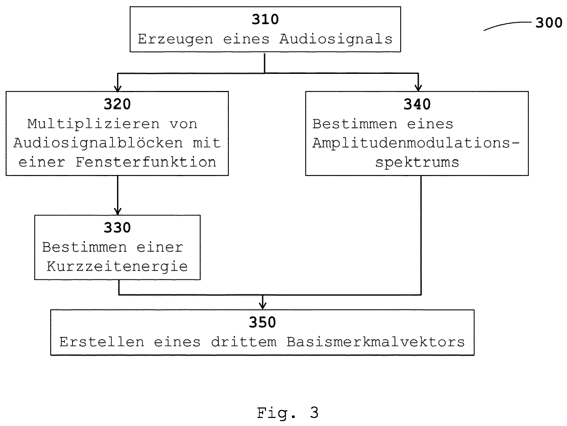

In Figur 3 ist ein Prozess 300 gezeigt, in dem ein dritter Basismerkmalvektor bestimmt wird.

Die Prozessschritte 310 und 320 entsprechen den Prozessschritten 110 und 120 in Figur 1. In Prozessschritt 330 wird das Merkmal der Kurzzeitenergie (STE) von einem Signalblock bestimmt. Die STE von einem Signalblock kann über den mathematischen Zusammenhang

$$STE = \frac{1}{N}\sum_{n=0}^{N-1} x^2[n] \qquad \text{(Formel 5)}$$

bestimmt werden.

In Prozessschritt 340 wird das Amplitudenmodulationsspektrum (AMS) des akustischen Signals bestimmt. Schritt 340 umfasst die folgende Schritte:

- Die zeitliche Komponente des akustischen Signals wird mit einer Abtastrate von 8 kHz unterabgetastet und in einer Filterbank gefiltert. Die Filterbank kann dabei beispielsweise Dreiecks- oder Trapezfilter enthalten, die gemäß der Bark-Skala aufgeteilt sein können. Die Filterbank kann mehrere Bandpass-Filter enthalten, beispielsweise kann die Filterbank 14 bis 20 Bandpass-Filter enthalten;
- von dem entstehenden Signal wird der Betrag gebildet;
- die Signale werden tiefpassgefiltert und unterabgetastet. Durch das Unterabtasten des akustischen Signals kann das Signal dezimiert werden. Die Grenzfrequenz für den Tiefpass liegt beispielsweise zwischen 25 Hz und 40 Hz.

Der Dezimationsfaktor hat beispielsweise einen Wert zwischen 80 und 160, insbesondere den Wert 100;

- anschließend werden die Signale jedes Filterbanksignals auf den Langzeitdurchschnitt der Signale normalisiert, in Signalblöcke segmentiert und mit einem Fenster (Hamming-, Hann-, Blackman- oder Kaiserfenster) multipliziert;
- auf jeden Signalblock wird die Fouriertransformation angewandt, wobei sich die Anzahl der DFT-Punkte aus der Länge des Signalblocks ergibt;
- zuletzt wird das Betragsspektrum gebildet, dieses kann optional quadriert werden.

In Prozessschritt 350 werden die in den Prozessschritten 330 und 340 bestimmten Merkmale des akustischen Signals in einem dritten Basismerkmalsvektor zusammengefasst.

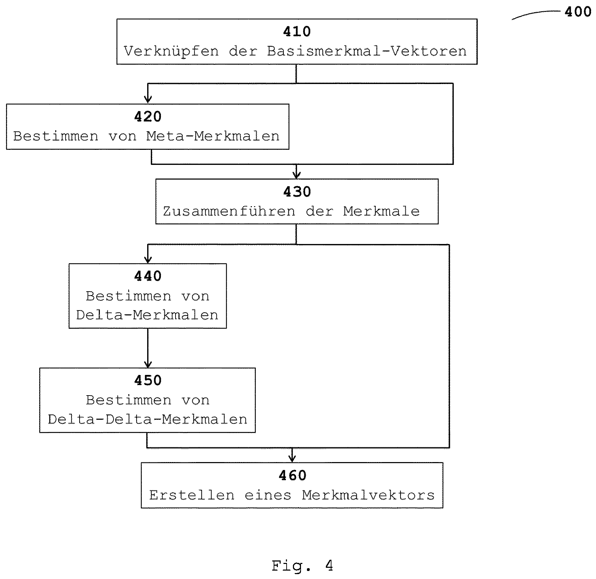

Figur 4 zeigt einen Prozess 400 zur Bestimmung eines Merkmalsvektors auf Basis der in den Prozessen 100, 200 und 300 bestimmten Basismerkmalvektoren.

In Prozessschritt 410 werden die in den Prozessschritten 100, 200 und 300 bestimmten und die in den Prozessschritten 190, 290 und 390 in dem ersten, zweiten und dritten Basismerkmalvektoren zusammengefassten Merkmale verknüpft.

In dem Prozessschritt 420 werden von allen bestimmten Merkmalen Meta-Merkmale bestimmt. Dazu wird jeweils der Mittelwert der mehreren Merkmale über mehrere zeitlich aufeinanderfolgende Signalblöcke bestimmt und/oder jeweils die Standardabweichung der mehreren Merkmale über mehrere zeitlich aufeinanderfolgende Signalblöcke bestimmt. Die Anzahl der zur Berechnung der Meta-Merkmale verwendeten Signalblöcke liegt beispielsweise zwischen 3 und 15.

Die Merkmale aus den bestimmten Basismerkmalvektoren und die in Prozessschritt 420 bestimmten Meta-Merkmale werden in Prozessschritt 430 zusammengeführt.

Aus den in Prozessschritt 430 zusammengeführten Merkmalen (y[t]) werden in Prozessschritt 440 jeweils Delta-Merkmale (d[t]) bestimmt. Die Bestimmung der Delta-Merkmale kann über den mathematischen Zusammenhang

$$d[t] = \frac{\sum_{m=1}^{M} m \cdot (y[t+m] - y[t-m])}{2 \cdot \sum_{m=1}^{M} m^2} \qquad \text{(Formel 6)}$$

erfolgen. Werte für m liegen beispielsweise zwischen 1 und 8.

Aus den in Prozessschritt 440 bestimmten Delta-Merkmalen werden in Prozessschritt 450 jeweils Delta-Delta-Merkmale bestimmt. Die Bestimmung der Delta-Delta-Merkmale kann durch nochmalige Anwendung der Formel 6 erfolgen, wenn die in Prozessschritt 440 bestimmten Delta-Merkmale (d[t]) als Merkmale (y[t]) verwendet werden.

In Prozessschritt 460 werden die in den Prozessschritten 420, 440 und 450 bestimmten Merkmale mit den in Prozessschritt 410 verknüpften Merkmalen in einem Merkmalsvektor zusammengeführt.

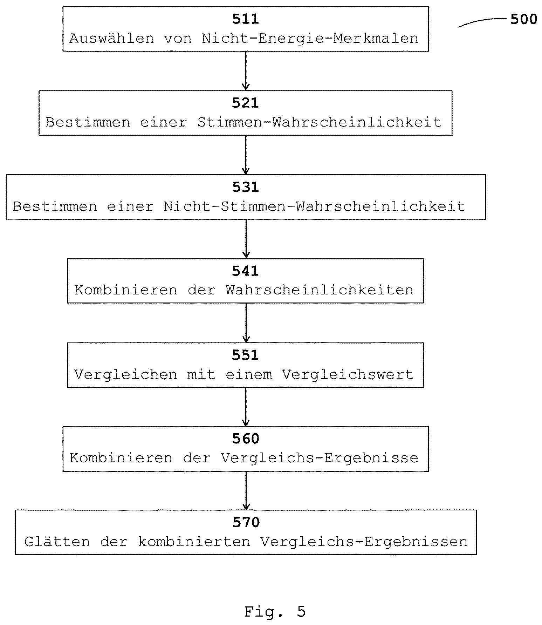

Figur 5 zeigt ein Prozess 500 zur Klassifizierung eines akustischen Signals mit den Merkmalen eines in Prozess 400 bestimmten Merkmalvektors in die Klassen Sprache und Nicht-Sprache.

In Prozessschritt 511 wird eine Teilmenge aller in dem Merkmalsvektor enthaltenen Merkmale ausgewählt, wobei die Teilmenge nur Nicht-Energiemerkmale enthält. Nicht-Energiemerkmale sind unabhängig von der Energie des akustischen Signals, sie stellen also spektrale, bzw. cepstrale Merkmale dar.

In Prozessschritt 521 wird bestimmt, mit welcher Wahrscheinlichkeit die in Prozessschritt 511 ausgewählten Merkmale des akustischen Signals Merkmale zumindest einer Stimme sind.

In Prozessschritt 531 wird bestimmt, mit welcher Wahrscheinlichkeit die in Prozessschritt 511 ausgewählten Merkmale des akustischen Signals nicht Merkmale zumindest einer Stimme sind.

In Prozessschritt 541 werden die Ergebnisse der Prozessschritte 521 und 531 kombiniert. Die Kombination der Ergebnisse der Prozessschritte 521 und 531 kann insbesondere die Subtraktion der in den Prozessschritten 521 und 531 bestimmten Wahrscheinlichkeiten umfassen.

In Prozessschritt 551 wird das Ergebnis aus Prozessschritt 541 mit einem Vergleichswert verglichen.

In einem zum Prozessschritt 511 analogen Prozessschritt 512 (nicht dargestellt) wird eine Teilmenge aller in dem Merkmalsvektor enthaltenen Merkmale ausgewählt, wobei die Teilmenge nur Energiemerkmale enthält. Energiemerkmale sind abhängig von der Energie des akustischen Signals.

Weitere, darauffolgende Prozessschritte 522, 532, 542 und 552 (nicht dargestellt) sind zu den Prozessschritten 521, 531, 541 und 551 analog.

In Prozessschritt 560 werden die Ergebnisse der Prozessschritte 551 und 552 kombiniert.

In Prozessschritt 570 werden die in Prozessschritt kombinierten Ergebnisse über mehrere Signalblöcke geglättet. Die Anzahl der mehreren Signalblöcke liegt beispielsweise zwischen 3 und 35.

Die Auswahl der Teilmenge der in dem Merkmalsvektor enthaltenen Merkmale in den Prozessschritten 511 und 512 sowie die Bestimmung der Wahrscheinlichkeiten in den Prozessschritten 521, 522, 531 und 532 kann automatisch und/oder manuell erfolgen und/oder auf einer Trainingsphase basieren. In der Trainingsphase können anhand eines Algorithmus zur Merkmalsselektion eine Teilmenge aller Merkmale ausgewählt werden. Die Auswahl kann automatisiert auf Basis der Trainingsdaten und/oder halbautomatisch durch eine manuelle Vorauswahl erfolgen. Im Fall einer manuellen Vorauswahl können verschiedene Merkmalstypen getrennt voneinander für das Training von jeweils eigenen statistischen Modellen für die Klassen Sprache und Nicht-Sprache eingesetzt werden.

Für jede Merkmalsuntergruppe können, um relevante Merkmale zu selektieren, verschiedene Kombinationen von einzelnen Merkmalen gebildet und statistische Modelle für die Klassen Sprache und Nicht-Sprache trainiert werden. Diese können auf einem Evaluationsdatensatz evaluiert werden, um die Merkmalskombination, die die besten Ergebnisse liefert, zur Klassifikation einzusetzen.

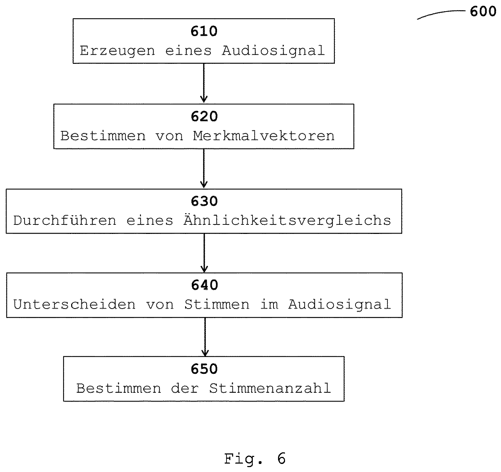

Figur 6 zeigt ein Flussdiagramm 600 eines Verfahrens zur Unterscheidung verschiedener Stimmen. Durch Unterschiede in der Anatomie der Stimmlippen und des Rachenraums von verschiedenen Sprechern sind die von verschiedenen Sprechern stammenden Stimmen unterscheidbar. In einem ersten Schritt 610 erfolgt das Empfangen eines Sprachsignals. In einem zweiten Schritt 620 erfolgt wie oben beschrieben die Bestimmung von Merkmalen bzw. Merkmals-Vektoren aus den Sprachsignalen, die eine Unterscheidung ermöglichen. Dazu gehören folgende Merkmale:

- Mel Frequency Cepstral Coefficients (MFCCs)
- Linear Predictive Cepstral Coefficients (LPCCs)
- Line spectral frequencies (LSFs)
- Perceptual Linear Prediction (PLP)

- Fundamental Frequency (F0)

Nach der Merkmalsberechnung erfolgt in einem dritten Schritt 630 der Ähnlichkeitsvergleich der Stimmen anhand der berechneten Merkmals-Vektoren. Zum Ähnlichkeitsvergleich werden bekannte Klassifikatoren wie:

- Gaussian Mixture Models (GMMs)

- Neural Networks (NN)

- Support Vector Machines (SVM)

verwendet.

Nach dem Ähnlichkeitsvergleich erfolgt im Schritt 640 die Entscheidung, ob unterschiedliche Sprecher vorliegen, wobei das Maß der Ähnlichkeit, ab wann mehrere Sprecher detektiert werden, mittels eines Schwellwertes bestimmt werden kann. In einem abschließenden Schritt 650 wird die Anzahl der Stimmen als Ergebnis des Verfahrens 600 ausgegeben.

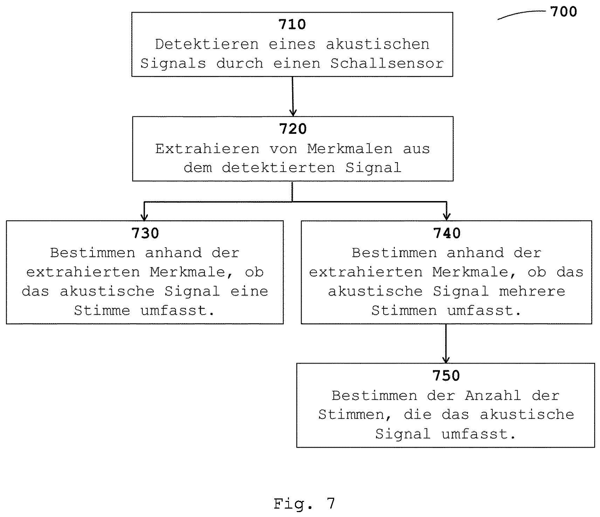

Figur 7 zeigt ein Flussdiagramm eines Verfahrens 700 zur automatischen Überwachung eines Verkehrsweges. In einem ersten Schritt 710 wird ein akustisches Signal durch einen Schallsensor detektiert. Durch die Detektion wird ein Audiosignal erzeugt. Schritt 710 wird damit beispielsweise von Schritt 110 in Figur 1 umfasst.

Aus dem detektierten Signal werden in Schritt 710 Merkmale extrahiert. Die Merkmalsextraktion erfolgt analog zum oben in Bezug auf Figuren 1 bis 4 beschriebenen Verfahren. Die Merkmalextraktion erfolgt mittels einer Analysevorrichtung eines Systems zur automatischen Überwachung eines Verkehrsweges.

Im Schritt 730 wird anhand der extrahierten Merkmale bestimmt, ob das akustische Signal eine Stimme erfasst. Dies ist oben in Bezug auf Figur 5 näher beschrieben. Die Bestimmung erfolgt mittels einer Spracherkennungsvorrichtung.

Ob das akustische Signal mehrere Stimmen enthält, wird in Schritt 740 bestimmt. Die Bestimmung der Anzahl der im akustischen Signal enthaltenden Stimmen erfolgt in Schritt 750. Schritte 740 und 750 werden analog zum in Bezug auf Figur 6 näher beschrieben Verfahren von der Analysevorrichtung durchgeführt.

**Patentansprüche**

1. Verfahren zur automatischen Überwachung eines Verkehrsweges, insbesondere in einem Tunnel, wobei ein akustisches Signal durch zumindest einen, entlang des zu überwachenden Verkehrsweges angeordneten Schallsensor detektiert wird (710) und wobei eine Analysevorrichtung aus dem akustischen Signal eine Anzahl Merkmale extrahiert (720), **dadurch gekennzeichnet, dass** aus der Anzahl Merkmale bestimmt wird (730), ob das akustische Signal zumindest eine Stimme umfasst.

2. Verfahren nach Anspruch 1, **dadurch gekennzeichnet, dass** aus der Anzahl Merkmale bestimmt wird (740), ob das akustische Signal mehrere Stimmen umfasst.

3. Verfahren nach einem der vorangegangenen Ansprüche, **dadurch gekennzeichnet, dass** aus der Anzahl Merkmale eine Anzahl von Stimmen bestimmt wird (750).

4. Verfahren nach einem der vorangegangenen Ansprüche, **dadurch gekennzeichnet, dass** aus der Anzahl Merkmale eine erste Wahrscheinlichkeit bestimmt wird (521), mit der das akustische Signal zumindest eine Stimme umfasst und/oder mehreren Stimmen umfasst und/oder eine bestimmte Anzahl von Stimmen umfasst.

5. Verfahren nach Anspruch 4, **dadurch gekennzeichnet, dass** aus der Anzahl Merkmale eine zweite Wahrscheinlichkeit bestimmt wird (531), mit der das akustische Signal keine Stimme umfasst und/oder nicht mehrere Stimmen umfasst und/oder nicht die bestimmte Anzahl Stimmen umfasst, und dass die erste und die zweite Wahrscheinlichkeit kombiniert (541), insbesondere addiert, und/oder mit zumindest einem Vergleichswert verglichen (551) werden.

6. Verfahren nach einem der vorangegangenen Ansprüche, **dadurch gekennzeichnet, dass** das akustische Signal in eine Anzahl Signalblöcke segmentiert wird und/oder die Anzahl Merkmale zumindest teilweise aus verschiedenen Signalblöcken extrahiert wird und/oder dass zumindest ein Teil der Anzahl Merkmale, insbesondere gleiche Merkmale, über zumindest einen Teil der Signalblöcke, insbesondere zeitlich aufeinanderfolgende Signalblöcke, gemittelt wird.

**7.** Verfahren einem der Ansprüche 4-6, **dadurch gekennzeichnet, dass** die erste und/oder zweite Wahrscheinlichkeit jeweils für zumindest einen Teil der Anzahl Signalblöcke bestimmt wird und/oder jeweils kombiniert, insbesondere addiert, werden und/oder jeweils mit zumindest einem Vergleichswert verglichen werden und/oder das Ergebnis des Vergleichs über mehrere der Anzahl Signalblöcke gemittelt wird.

**8.** Verfahren nach einem der vorhergehenden Ansprüche, **dadurch gekennzeichnet, dass** die Anzahl Merkmale des akustischen Signals das Spektrum und/oder aus dem Spektrum abgeleitete Merkmale und/oder das Zeitsignal und/oder aus dem Zeitsignal abgeleitete Merkmale umfassen.

**9.** Verfahren nach Anspruch 8, **dadurch gekennzeichnet, dass** die aus dem Spektrum und/oder aus dem Zeitsignal abgeleiteten Merkmale das Cepstrum und/oder aus dem Cepstrum abgeleitete Merkmale und/oder die Flatness des Spektrums und/oder Mel-Frequenz-Cepstrum-Koeffizienten und/oder die Peak-Valley-Differenz und/oder aus der Peak-Valley-Differenz abgeleitete Merkmale und/oder die Kurzzeitenergie und/oder das Amplitudenmodulationsspektrum und/oder den Cepstral-Peak und/oder das Cepstral-Peak-Verhältnis und/oder das Cepstral-Peak-Summenverhältnis und/oder die Cepstral-Peak-Position umfassen.

**10.** System zur automatischen Überwachung eines Verkehrsweges, insbesondere in einem Tunnel, das zumindest einen, entlang des zu überwachenden Verkehrsweges angeordneten Schallsensor zur Aufnahme von akustischen Signalen und eine Analysevorrichtung umfasst, wobei die Analysevorrichtung dazu ausgebildet ist, eine Anzahl Merkmale der akustischen Signale zu extrahieren, **dadurch gekennzeichnet, dass** das System eine Spracherkennungsvorrichtung umfasst, die dazu ausgebildet ist, aus der Anzahl Merkmale zu bestimmen, ob das akustische Signal zumindest eine Stimme umfasst.

**11.** System nach Anspruch 10, **dadurch gekennzeichnet, dass** die Spracherkennungsvorrichtung dazu ausgebildet ist, aus der Anzahl Merkmale zu bestimmen, ob das akustische Signal mehrere Stimmen umfasst, und/oder aus der Anzahl Merkmale eine Anzahl Stimmen zu bestimmen.

**12.** System nach Anspruch 10 oder 11, **dadurch gekennzeichnet, dass** die Analysevorrichtung dazu ausgebildet ist, aus der Anzahl Merkmale eine erste Wahrscheinlichkeit zu bestimmen, mit der das akustische Signal zumindest eine Stimme umfasst und/oder mehreren Stimmen umfasst und/oder eine bestimmte Anzahl Stimmen umfasst.

**13.** System nach Anspruch 12, **dadurch gekennzeichnet, dass** die Analysevorrichtung dazu ausgebildet ist, aus der Anzahl Merkmale eine zweite Wahrscheinlichkeit zu bestimmen, mit der das akustische Signal keine Stimme umfasst und/oder nicht mehrere Stimmen umfasst und/oder nicht die bestimmte Anzahl Stimmen umfasst und dass die Analysevorrichtung dazu ausgebildet ist, die erste Wahrscheinlichkeit und die zweite Wahrscheinlichkeit zu kombinieren, insbesondere zu addieren, und/oder mit zumindest einem Vergleichswert zu vergleichen.

**14.** System nach einem der Ansprüche 10-13, **dadurch gekennzeichnet, dass** die Analyseeinheit eine Segmentierungsvorrichtung umfasst, die dazu ausgebildet ist das akustische Signal in eine Anzahl Signalblöcke zu segmentieren und/oder dass die Analyseeinheit dazu ausgebildet ist, zumindest einen Teil der Anzahl Merkmale, insbesondere gleiche Merkmale, über zumindest einen Teil der Anzahl Signalblöcke, insbesondere zeitlich aufeinanderfolgende Signalblöcke, zu mitteln.

**15.** System nach einem der Ansprüche 12-14, **dadurch gekennzeichnet, dass** die Analysevorrichtung dazu ausgebildet ist, die erste Wahrscheinlichkeit und die zweite Wahrscheinlichkeit jeweils für zumindest einen Teil der Anzahl Signalblöcke zu bestimmen und/oder jeweils zu kombinieren, insbesondere zu addieren, und/oder jeweils mit zumindest einem Vergleichswert zu vergleichen und/oder das Ergebnis des Vergleichs über mehrere der Anzahl Signalblöcke zu mitteln.

```
┌─────────────────────────────────────┐
│              110                     │          ⌒— 100
│     Erzeugen eines Audiosignals      │
└─────────────────────────────────────┘
                    │
                    ▼
┌─────────────────────────────────────────────────────────────────┐
│                          120                                     │
│  Multiplizieren von Audiosignalblöcken mit einer Fensterfunktion │
└─────────────────────────────────────────────────────────────────┘
                    │
                    ▼
┌─────────────────────────────────────┐
│              130                     │
│       Bestimmen eines Spektrums      │
└─────────────────────────────────────┘
         │                        │
         ▼                        ▼
┌──────────────────┐      ┌──────────────────┐
│       140        │      │       150        │
│  Bestimmen eines │      │  Bestimmen eines │
│  ersten Cepstrums│      │ zweiten Cepstrums│
└──────────────────┘      └──────────────────┘
         │                        │
         ▼                        ▼
┌──────────────────┐      ┌──────────────────┐
│       160        │      │       170        │
│ Bestimmen von    │      │ Bestimmen von    │
│ ersten           │      │ zweiten          │
│ Cepstrum-Merkmalen│     │ Cepstrum-Merkmalen│
└──────────────────┘      └──────────────────┘
         │                        │
         └────────────┬───────────┘
                      ▼
┌─────────────────────────────────────────────────┐
│                    180                           │
│   Erstellen eines ersten Basismerkmalvektors     │
└─────────────────────────────────────────────────┘
```

Fig. 1

```
┌─────────────────────────────────────────┐
│                  210                     │        ╭─── 200
│         Erzeugen eines Audiosignals      │      ╱
└─────────────────────────────────────────┘
                      │
                      ▼
┌─────────────────────────────────────────────────────────────────┐
│                          220                                    │
│  Multiplizieren von Audiosignalblöcken mit einer Fensterfunktion│
└─────────────────────────────────────────────────────────────────┘
                      │
                      ▼
┌─────────────────────────────────────────┐
│                  230                     │
│         Bestimmen eines Spektrums        │
└─────────────────────────────────────────┘
          │                         │
          ▼                         ▼
┌──────────────────────┐  ┌──────────────────────────────┐
│        240           │  │             250              │
│ Bestimmen von Mel-   │  │       Bestimmen einer        │
│ Frequenz-            │  │  Peak-Valley-Differenz (PVD)  │
│ Cepstral-Koeffizienten│  │                              │
└──────────────────────┘  └──────────────────────────────┘
          │                         │
          │                         ▼
          │         ┌──────────────────────────────┐
          │         │             260              │
          │         │   Bestimmen von PVD Merkmalen │
          │         └──────────────────────────────┘
          │                         │
          ▼                         ▼
┌─────────────────────────────────────────────────┐
│                     270                         │
│   Erstellen eines zweiten Basismerkmalvektors    │
└─────────────────────────────────────────────────┘
```

Fig. 2

```
┌─────────────────────────────────┐
│               310               │                        ⌒── 300
│    Erzeugen eines Audiosignals   │
└─────────────────────────────────┘
```

```
┌──────────────────────────┐          ┌──────────────────────────┐
│            320            │          │            340            │
│    Multiplizieren von     │          │    Bestimmen eines        │
│  Audiosignalblöcken mit   │          │  Amplitudenmodulations-   │
│   einer Fensterfunktion   │          │        spektrums          │
└──────────────────────────┘          └──────────────────────────┘
```

```
┌──────────────────────────┐
│            330            │
│     Bestimmen einer       │
│     Kurzzeitenergie       │
└──────────────────────────┘
```

```
┌───────────────────────────────────────────────────────┐
│                          350                           │
│   Erstellen eines drittem Basismerkmalvektors          │
└───────────────────────────────────────────────────────┘
```

Fig. 3

400

```
┌─────────────────────────────────────────┐
│                   410                    │
│   Verknüpfen der Basismerkmal-Vektoren   │
└─────────────────────────────────────────┘
              │
              ▼
┌──────────────────────────────┐
│             420              │
│  Bestimmen von Meta-Merkmalen │
└──────────────────────────────┘
                      │
                      ▼
        ┌──────────────────────────────┐
        │             430              │
        │  Zusammenführen der Merkmale  │
        └──────────────────────────────┘
              │
              ▼
┌──────────────────────┐
│         440          │
│    Bestimmen von     │
│   Delta-Merkmalen    │
└──────────────────────┘
        │
        ▼
┌──────────────────────────┐
│           450            │
│      Bestimmen von       │
│  Delta-Delta-Merkmalen   │
└──────────────────────────┘
                      │
                      ▼
        ┌──────────────────────────────┐
        │             460              │
        │  Erstellen eines Merkmalvektors │
        └──────────────────────────────┘
```

Fig. 4

```
┌─────────────────────────────────────────────┐
│                    511                       │              ╱──── 500
│    Auswählen von Nicht-Energie-Merkmalen     │
└─────────────────────────────────────────────┘
                        │
                        ▼
┌─────────────────────────────────────────────┐
│                    521                       │
│    Bestimmen einer Stimmen-Wahrscheinlichkeit │
└─────────────────────────────────────────────┘
                        │
                        ▼
┌─────────────────────────────────────────────┐
│                    531                       │
│  Bestimmen einer Nicht-Stimmen-Wahrscheinlichkeit │
└─────────────────────────────────────────────┘
                        │
                        ▼
┌─────────────────────────────────────────────┐
│                    541                       │
│      Kombinieren der Wahrscheinlichkeiten    │
└─────────────────────────────────────────────┘
                        │
                        ▼
┌─────────────────────────────────────────────┐
│                    551                       │
│      Vergleichen mit einem Vergleichswert    │
└─────────────────────────────────────────────┘
                        │
                        ▼
┌─────────────────────────────────────────────┐
│                    560                       │
│    Kombinieren der Vergleichs-Ergebnisse     │
└─────────────────────────────────────────────┘
                        │
                        ▼
┌─────────────────────────────────────────────┐
│                    570                       │
│   Glätten der kombinierten Vergleichs-Ergebnissen │
└─────────────────────────────────────────────┘
```

Fig. 5

600

| 610 |
| Erzeugen eines Audiosignal |

↓

| 620 |
| Bestimmen von Merkmalvektoren |

↓

| 630 |
| Durchführen eines Ähnlichkeitsvergleichs |

↓

| 640 |
| Unterscheiden von Stimmen im Audiosignal |

↓

| 650 |
| Bestimmen der Stimmenanzahl |

Fig. 6

~700

```
┌─────────────────────────────────────┐
│                710                  │
│   Detektieren eines akustischen     │
│  Signals durch einen Schallsensor   │
└─────────────────────────────────────┘
                   │
                   ▼
┌─────────────────────────────────────┐
│                720                  │
│    Extrahieren von Merkmalen aus    │
│       dem detektierten Signal       │
└─────────────────────────────────────┘
```

```
┌──────────────────────────┐   ┌──────────────────────────┐
│           730            │   │           740            │
│   Bestimmen anhand der   │   │   Bestimmen anhand der   │
│  extrahierten Merkmale,  │   │ extrahierten Merkmale,   │
│  ob das akustische       │   │ ob das akustische Signal │
│  Signal eine Stimme      │   │ mehrere Stimmen umfasst. │
│  umfasst.                │   │                          │
└──────────────────────────┘   └──────────────────────────┘
                                           │
                                           ▼
                               ┌──────────────────────────┐
                               │           750            │
                               │  Bestimmen der Anzahl    │
                               │  der Stimmen, die das    │
                               │  akustische Signal       │
                               │  umfasst.                │
                               └──────────────────────────┘
```

Fig. 7

Europäisches
Patentamt

European
Patent Office

Office européen
des brevets

# EUROPÄISCHER RECHERCHENBERICHT

Nummer der Anmeldung

EP 18 17 1069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 206 931 362 U (HANGZHOU PIONEER ELECTRONIC TECH CO LTD) 26. Januar 2018 (2018-01-26) * Anspruch 1 * * Absatz [0021] * ----- | 1-15 | INV. G10L25/78 |
| X | Franz Graf: "Rapid Incident Detection through Acoustic Tunnel Monitoring - AKUT", Presentation held at the 7th annual Conference on Fire Protection and Safety in Tunnels, Sandvika, Norway, 23. September 2015 (2015-09-23), XP055521241, Gefunden im Internet: URL:http://www.arena-international.com/Journals/2015/10/09/s/i/v/Day-1---05-Fraz-Graf.pdf [gefunden am 2018-11-05] * Folie 7 * * Folie 12 * ----- | 1-15 | |
| X | ASFINAG: "Die Tunnelohren AKUT sind jetzt erstmals in Südengland im Einsatz", , 5. Dezember 2017 (2017-12-05), XP002786248, Gefunden im Internet: URL:https://www.asfinag.at/ueber-uns/newsroom/news-%C3%BCberblick/akut-in-suedengland-im-einsatz/ [gefunden am 2018-11-05] * Abschnitt "So funktioniert AKUT" * ----- | 1-15 | **RECHERCHIERTE SACHGEBIETE (IPC)** G10L |
| A | US 2002/171551 A1 (ESHELMAN LARRY J [US] ET AL) 21. November 2002 (2002-11-21) * Absatz [0054] - Absatz [0057] * ----- | 2,3,11 | |

-/--

Der vorliegende Recherchenbericht wurde für alle Patentansprüche erstellt

| Recherchenort | Abschlußdatum der Recherche | Prüfer |
|---|---|---|
| Den Haag | 6. November 2018 | Schneider, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 18 17 1069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ELIZALDE BENJAMIN ET AL: "Lost in segmentation: Three approaches for speech/non-speech detection in consumer-produced videos", 2013 IEEE INTERNATIONAL CONFERENCE ON MULTIMEDIA AND EXPO (ICME), IEEE, 15. Juli 2013 (2013-07-15), Seiten 1-6, XP032488180, ISSN: 1945-7871, DOI: 10.1109/ICME.2013.6607486 [gefunden am 2013-09-24] * Abschnitt 2 * * Abschnitt 3 *<br><br>----- | 4-9, 12-15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 6. November 2018 | Schneider, Daniel |

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 18 17 1069

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2018

| Im Recherchenbericht angeführtes Patentdokument | Datum der Veröffentlichung | Mitglied(er) der Patentfamilie | Datum der Veröffentlichung |
|---|---|---|---|
| CN 206931362 U | 26-01-2018 | KEINE | |
| US 2002171551 A1 | 21-11-2002 | AT 313837 T | 15-01-2006 |
| | | CN 1527992 A | 08-09-2004 |
| | | DE 60208166 T2 | 10-08-2006 |
| | | EP 1371043 A2 | 17-12-2003 |
| | | JP 2004523849 A | 05-08-2004 |
| | | US 2002171551 A1 | 21-11-2002 |
| | | WO 02075688 A2 | 26-09-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 500235 B1